# EUROPÄISCHE PATENTSCHRIFT

(11) **EP 3 387 274 B1**
(45) Veröffentlichungstag und Bekanntmachung des Hinweises auf die Patenterteilung: **22.05.2019**
(21) Anmeldenummer: 16816625.4
(22) Anmeldetag: 12.12.2016
(51) Int. Cl.: F16C 13/02, F16C 37/00, F16C 19/52

(54) **LAGERBOCK ZUR AUFNAHME EINES LAGERS FÜR EINE ROLLE**
BEARING BLOCK FOR HOLDING A BEARING FOR A ROLLER
SUPPORT DE PALIER DESTINÉ À RECEVOIR UN PALIER POUR UN ROULEAU

(30) Priorität: 11.12.2015 DE 102015225024
(43) Veröffentlichungstag der Anmeldung: 17.10.2018
(73) Patentinhaber: SMS Group GmbH, 40237 Düsseldorf (DE)
(72) Erfinder: BANSE, Robert, 41469 Neuss (DE); REIFFERSCHEID, Markus, 41352 Korschenbroich (DE)
(74) Vertreter: Klüppel, Walter
(86) Internationale Anmeldenummer: PCT/EP2016/080702
(87) Internationale Veröffentlichungsnummer: WO 2017/098057

(56) Entgegenhaltungen:
- WO-A1-2011/065882
- DE-A1-102008 046 540
- DE-A1-102009 039 259
- DE-A1-102009 054 165
- DE-C1- 10 019 324
- JP-A- 2007 085 890
- JP-A- 2009 269 040
- US-A- 4 944 609
- US-A1- 2011 158 571
- US-A1- 2013 129 270

## Beschreibung

Die Erfindung betrifft einen Lagerbock zur Aufnahme eines Lagers für eine Rolle, insbesondere eine Strangführungsrolle in einer Strangführungseinrichtung einer Stranggießanlage. Darüber hinaus betrifft die Erfindung eine Strangführungseinrichtung mit mindestens einem entsprechenden Lagerbock.

### Stand der Technik:

In Stranggießanlagen zum Gießen von Brammen werden drehgelagerte Rollen eingesetzt, welche die Aufgabe haben, den gegossenen Metallstrang nach dem Verlassen der Kokille entlang einer vorgegebenen Bahn zu führen und zu kühlen und zu stützen. Die Rollen sind dabei mit ihren Zapfen in Lagerböcken mittels Lagern gelagert und werden dabei durch Zuführen eines Kühlmittels (insbesondere Wasser) unter Druck in das Innere der Rolle und des Lagerbocks zur Abführung von Wärme gekühlt, was beispielsweise über Drehdurchführungen realisiert ist.

Die Stützung und/oder Führung des Metallstrangs kann - je nach Gießformat und Position - allseitig, von gegenüberliegenden Seiten des Strangs oder nur von der Strangunterseite her erfolgen. Dementsprechend werden die Rollen in unterschiedlichen Anordnungen, wie Rollenkränzen, versetzte Doppelrollen, mehrfach abgestützten Längsrollen oder als einfache Rolle eingesetzt.

Die Rollen, insbesondere die Rollenmäntel, Lagerböcke und Lager sind im Betrieb extremer Hitzebelastung durch direkten/indirekten Kontakt mit dem glühenden Metallstrang und vor allem durch die Strahlungswärme ausgesetzt. Dies gilt insbesondere für Rollen im Gießbogen. Hierzu kommt die aggressive Umgebung, hervorgerufen durch mit Gießpulverresten kontaminiertes Wasser sowie durch Wasserdampf, Zunder etc..

Vielfach sind enge Abstände zwischen den benachbarten Rollen und folglich kleine Durchmesser der Rollen erforderlich, um den Gießstrang effizient zu stützen, was die Beanspruchung der Rollen zusätzlich erhöht. Lagergrößen werden folglich kleiner.

Enge Abstände zu benachbarten Strängen sowie andere Komponenten der Gießanlage, wie Kühlelemente, Stahlbauwerke, Fundamente oder Leitungen verlangen eine möglichst kompakte Bauweise der Rollenführungen. Dennoch müssen die eingesetzten Rollen und deren Rollenanordnung eine hohe Zuverlässigkeit und eine lange Lebensdauer besitzen sowie eine einfache Wartung erlauben.

Lager, die diesen hohen Anforderungen erfüllen, sind im Stand der Technik grundsätzlich bekannt, z. B. aus der DE 23 47 892 oder der WO 2011/065882 A1. Aus diesen beiden Druckschriften sind jeweils Lagerböcke bekannt, die als Vollgussteile aus martensitischem Stahl hergestellt sind. Sie weisen jeweils einen integrierten Kühlkanal für ein Kühlmittel mit einem Einlauf und einem Auslauf auf.

Obwohl diese Lagerböcke aufgrund ihrer Fertigung als Vollgusskörper bereits recht wartungsfreundlich sind, so weisen sie doch den Nachteil auf, dass die Wirkweise von Kühlung und Lagerung nicht überwacht wird.

Die JP 2009269040 A offenbart die Überwachung der Drehzahl einer Strangführungsrolle.

Die US 2011/0158571 A1 offenbart ein abgedichtetes Wälzlager.

Der Erfindung liegt die Aufgabe zugrunde, einen bekannten Lagerbock dahingehend weiterzubilden, dass er eine Verbesserung der Produktqualität der gegossenen Brammen ermöglicht.

Diese Aufgabe wird durch den Lagerbock gemäß Patentanspruch 1 gelöst.

Das beanspruchte Erfassen der Drehzahl ermöglicht das Überwachen der Drehfunktionalität des Lagers. Dies ist insbesondere wichtig im Hinblick auf eine Verbesserung der Produktqualität, um die Bildung von Streifen auf den gegossenen und in der Strangführung geführten Brammen zu vermeiden, die ansonsten durch stehende Rollen auf den Brammen entstehen. Auch wird dadurch die Entstehung von sogenannten "black stones", d. h. von Ablagerungen von Zunder vermieden, die ansonsten nachfolgend die produzierten Brammen beschädigen.

Erfindungsgemäß sind zusätzlich zu dem Vorsehen des Drehzahlsensors zwei Temperatursensoren vorgesehen, die jeweils als Thermoelemente ausgebildet Das Vorsehen dieser Thermoelemente ermöglicht die Überwachung der Wirkungsweise der Kühlung und damit der Lagerung der Rollen insgesamt. Die beanspruchte Temperaturmessung ermöglicht eine Regelung der Zuflussmengen des Kühlmittels in den Lagerbock und damit eine Optimierung des Kühlmittelverbrauchs. Ein erstes Thermoelement ist dabei in dem Einlauf des Kühlmittelkanals zum Erfassen der dortigen Kühlmitteleinlauftemperatur vorgesehen. Ein zweites Thermoelement ist in dem Auslauf des Kühlmittelkanals vorgesehen zum Erfassen der dortigen Kühlmittelauslauftemperatur. Das Erfassen der Einlauftemperatur und der Auslauftemperatur des Kühlmittels ermöglicht eine besonders präzise Überwachung der Wirkung der Kühlung und damit wiederum einhergehend eine optimale Regelung der Kühlmittelzufuhr bzw. des Kühlmittelverbrauchs.

Gemäß einem ersten Ausführungsbeispiel können die Drehzahlsensoren beispielsweise als Hall-Sensoren ausgebildet sein mit Magneten auf dem Rollenzapfen. Der Drehzahlsensor ist vorzugsweise in einer von außen in den Lagerbock eingebrachten Sackbohrung befestigt.

Die Thermoelemente sind vorzugsweise als Einschraubthermoelemente ausgebildet und jeweils in eine Bohrung in dem Einlauf und dem Auslauf des Kühlmittelkanals eingeschraubt.

In dem Kühlmittelkanal befinden sich vorzugsweise mehrere Stabilisierungsrippen. Diese sind fertigungstechnisch erforderlich, wenn der Lagerbock, wie beansprucht, als Vollgusskörper ausgebildet ist. Zudem haben sie die Aufgabe, den Kühlmittelkanal zu stützen und zu stabilisieren.

Die oben genannte Aufgabe der Erfindung wird weiterhin durch eine Strangführungseinrichtung einer Stranggießanlage gelöst, wobei zumindest ein Zapfen einer der Strangführungsrollen der Strangführungseinrichtung in einem erfindungsgemäßen Lagerbock gelagert ist. Die Vorteile dieser Lösung entsprechen den oben mit Bezug auf den beanspruchten Lagerbock genannten Vorteilen.

Weitere vorteilhafte Ausgestaltungen des erfindungsgemäßen Lagerbocks und der erfindungsgemäßen Strangführungseinrichtung sind Gegenstand der abhängigen Ansprüche.

Der Beschreibung sind vier Figuren beigefügt, wobei
Figur 1 einen ersten Vertikalschnitt durch den erfindungsgemäßen Lagerbock entlang der Längsachse einer gelagerten Rolle;
Figur 2 einen zweiten Vertikalschnitt durch den erfindungsgemäßen Lagerbock quer zur Längsachse der gelagerten Rolle;
Figur 3 einen Horizontalschnitt durch den erfindungsgemäßen Lagerbock; und
Figur 4 einen abgeknickten Vertikalschnitt durch den Lagerbock zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

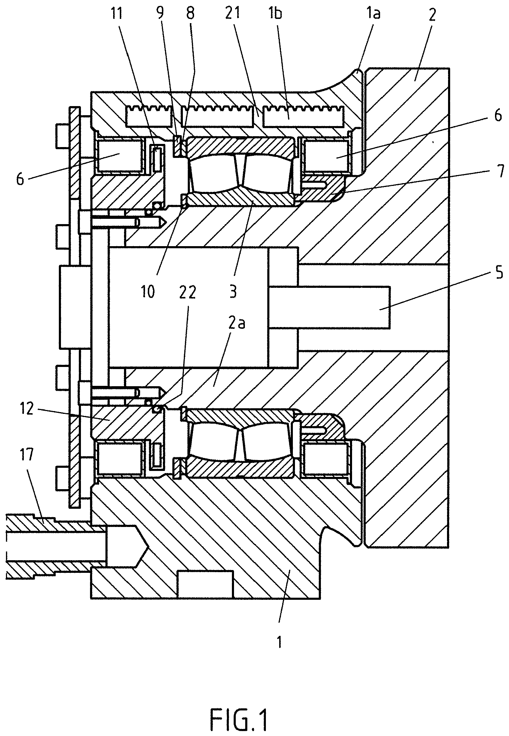

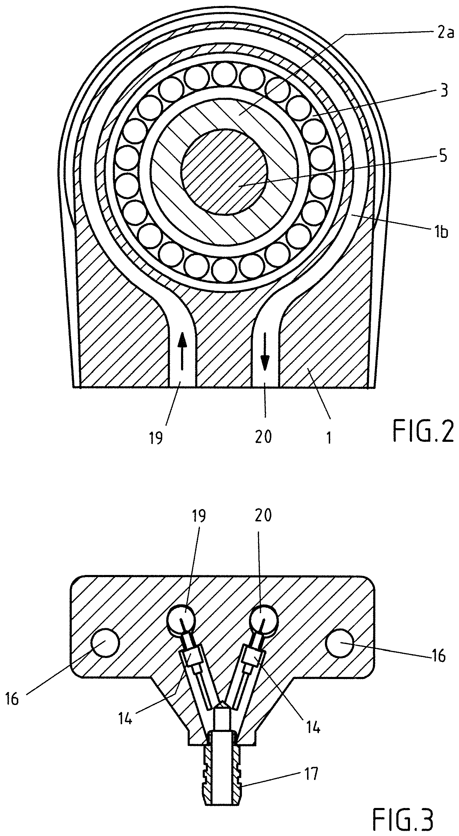

Figur 1 zeigt den erfindungsgemäßen Lagerbock 1 in einem Längsschnitt durch die Längsachse der zu lagernden Rolle 2. Der erfindungsgemäße Lagerbock 1 umfasst einen Schmutzbuckel 1a und einen integrierten Kühlmittelkanal 1b. Der Kühlmittelkanal 1b ist hier beispielhaft mit zwei Stabilisierungsrippen 21 in drei Teilkanäle unterteilt. Der Lagerbock dient zur Aufnahme eines Lagers, insbesondere eines Wälzlagers 3. Das Wälzlager 3 wiederum dient zur Aufnahme und Lagerung des Lagerzapfens 2a der Rolle 2; siehe auch Figur 2. Es bezeichnen die Bezugszeichen 5 eine Drehdurchführung, 6 eine Kassettendichtung, 7 und 8 jeweils einen Distanzring und 9 und 10 jeweils einen Sicherungsring.

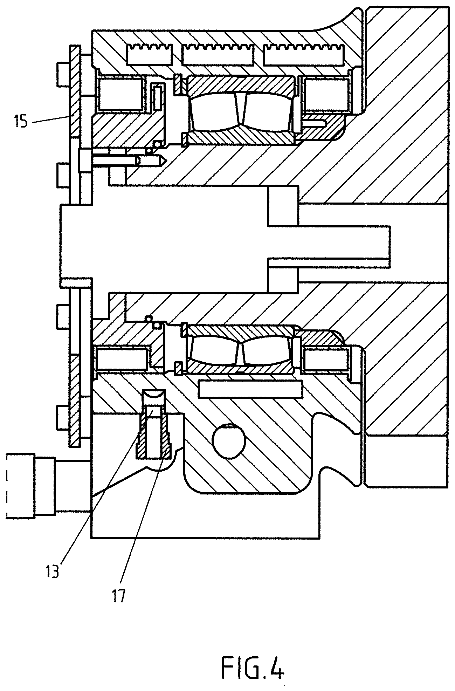

Zur Erfassung der Drehzahl der Rolle und damit zur Überwachung der Funktionsweise der Drehfunktion des Lagers weist der Lagerbock 1 einen Hall-Sensor 13 auf, wie in Figur 4 gezeigt. In Figur 4 ist zu erkennen, dass dieser Hall-Sensor 13 in einer Sackbohrung an der Außenseite des Lagerbocks 1 befestigt ist. Wie in Figur 1 erkennbar, sind diesem Hall-Sensor Magnete 11 zugeordnet, welche mit Hilfe von Magnethaltern 12 an dem Zapfen der Rolle 2 fest montiert sind und mit dem Zapfen mitrotieren. Bei einer Drehung der Rolle 2 erfasst der Hall-Sensor 13 ein veränderliches Magnetfeld, welches von den auf dem Rollenzapfen mitrortierenden Magneten generiert wird. Insbesondere erfasst der Hall-Sensor, ob ein Magnet an ihm vorbei rotiert oder nicht. Der Hall-Sensor generiert ein entsprechendes Messsignal. Aus diesem Messsignal kann unter Berücksichtigung der Anzahl der auf dem Umfang des Rollenzapfens verteilt angeordneten Magnete 11 die Drehzahl der Rolle 2 errechnet werden.

Weiterhin ist in Figur 1 eine Muffe 17 für einen Wellschlauch erkennbar, durch welchen die Kabel des Hall-Sensors 13 sowie die Kabel von Thermoelementen geführt sein können. Schließlich ist mit dem Bezugszeichen 22 ein Dichtring zwischen dem Magnethalter 12 und dem Lagerzapfen 2a der Rolle 2 erkennbar.

Figur 2 zeigt den besagten zweiten Vertikalschnitt durch den erfindungsgemäßen Lagerbock, wobei dieser Vertikalschnitt in einer Ebene senkrecht zur Längsachse der zu lagernden Rolle liegt. Zu erkennen ist der Lagerbock 1 und der in dem Lagerbock ausgebildete Kühlkanal 1b. Der Kühlkanal weist einen Kühlmitteleinlauf 19 und einen Kühlmittelausauf 20 auf. Es ist zu erkennen, dass der Kühlmittelkanal das aufgenommene Lager, insbesondere Wälzlager 3 an seinem Umfang über einen sehr großen Umfangswinkelbereich umschließt. Im Inneren des Wälzlagers sind - von diesem aufgenommen und koaxial zu diesem angeordnet - der Lagerzapfen 2a der Rolle 2 sowie die Drehdurchführung 5 erkennbar.

Figur 3 zeigt einen Horizontalschnitt durch den Lagerbock 1, insbesondere durch den in Figur 2 gezeigten Einlauf 19 und Auslauf 20 des Kühlmittelkanals 1b. Gut zu erkennen sind ein erstes und ein zweites Thermoelement 14, die radial in den Einlauf 19 und den Auslauf 20 hineinragen zum Messen der Kühlmitteleinlauftemperatur und der Kühlmittelauslauftemperatur. Sie sind als Einschraubthermoelemente ausgebildet und in einer entsprechenden Bohrung am Umfang des Einlaufs 19 und des Auslaufs 20 eingeschraubt. Ihre Messkabel werden über den Wellschlauch und die besagte Muffe 17 nach außen geführt. Zusätzlich sind in Figur 3 zwei Befestigungsbohrungen 16 gezeigt zum Befestigen des Lagerbocks 1.

### Bezugszeichenliste

- 1: Lagerbock mit
- 1a: Schmutzbuckel
- 1b: Kühlmittelkanal
- 2: Rolle
- 2a: Lagerzapfen der Rolle
- 3: Wälzlager
- 5: Drehdurchführung
- 6: Kassettendichtung
- 7: Distanzring
- 8: Distanzring
- 9: Sicherungsring
- 10: Sicherungsring
- 11: Magnet
- 12: Magnethalter
- 13: Hall-Sensor
- 14: Einschraubthermoelemente
- 15: Deckelblech
- 16: Befestigungsbohrung
- 17: Muffe für Weilschlauch
- 18: Dichtring
- 19: Wassereinlauf
- 20: Wasserauslauf
- 21: Stabilisierungsrippe
- 22: Dichtring

## Patentansprüche

1. Lagerbock (1) zur Aufnahme eines Lagers (3) für eine Rolle (2), insbesondere eine Strangführungsrolle in einer Strangführungseinrichtung, aufweisend mindestens einen Kühlmittelkanal (1b) mit einem Einlauf (19) und einem Auslauf (20) für Kühlmittel,
wobei der Lagerbock (1) mit dem integrierten innenliegenden Kühlmittelkanal (1b) als Vollgusskörper ausgebildet ist;
**gekennzeichnet durch**
einen Drehzahlsensor (13) zum Erfassen der Drehzahl der Rolle; und mindestens zwei Temperatursensoren (14) zum Erfassen der Temperatur des Kühlmittels in dem Kühlmittelkanal (1b), wobei
die Temperatursensoren (14) als Thermoelemente ausgebildet sind und
ein erstes Thermoelement in dem Einlauf (19) zum Erfassen der Kühlmitteleinlauftemperatur und ein zweites Thermoelement in dem Auslauf (20) des Kühlmittelkanals zum Erfassen der Kühlmittelauslauftemperatur vorgesehen sind.

2. Lagerbock (1) nach Anspruch 1,
**dadurch gekennzeichnet,**
**dass** der Drehzahlsensor (13) als Hall-Sensor ausgebildet ist; und
**dass** vorzugsweise eine Mehrzahl von Magneten (11) - vorzugsweise mit Hilfe von Magnethaltern (12) - zum Zusammenwirken mit dem Hall-Sensor an dem Zapfen (2a) der Rolle befestigt ist.

3. Lagerbock (1) nach einem der vorangegangenen Ansprüche,
**gekennzeichnet durch**
eine in den Lagerbock von außen eingebrachte Sackbohrung, in welcher der Drehzahlsensor befestigt ist.

4. Lagerbock (1) nach Anspruch 1,
**dadurch gekennzeichnet,**
**dass** die Thermoelemente (14) jeweils als Einschraubthermoelemente ausgebildet und in eine Bohrung in dem Einlauf (19) und dem Auslauf (20) des Kühlmittelkanals (1b) in dem Lagerbock (1) eingeschraubt sind.

5. Lagerbock (1) nach einem der vorangegangenen Ansprüche,
**dadurch gekennzeichnet,**
**dass** in dem Kühlmittelkanal (1b) wenigstens eine Stabilisierungsrippe (21) ausgebildet ist.

6. Lagerbock (1) nach einem der vorangegangenen Ansprüche,
**dadurch gekennzeichnet,**
**dass** der Lagerbock aus einem ausgehärteten nichtrostenden Chrom-Nickel-Kupfer-Stahl gegossen ist.

7. Lagerbock (1) nach einem der vorangegangenen Ansprüche,
**gekennzeichnet durch**
Wellschläuche für Signalkabel der Thermoelemente und/oder des Hallsensors, wobei die Wellschläuche mit Muffen (17) an dem Lagerbock (1) befestigt sind.

8. Lagerbock (1) nach einem der vorangegangenen Ansprüche,
**dadurch gekennzeichnet,**
**dass** das Lager (3) als abgedichtetes Wälzlager ausgebildet ist.

9. Strangführungseinrichtung einer Stranggießanlage, aufweisend:
eine Mehrzahl von Strangführungsrollen zum Führen eines Gießstrangs nach Verlassen einer Stranggießkokille;
**dadurch gekennzeichnet,**
**dass** zumindest ein Zapfen einer der Strangführungsrollen gelagert ist in einem Lagerbock (1) gemäß einem der vorangegangenen Ansprüche; und
**dass** eine Prozesssteuerung vorgesehen ist zur Regelung der Zuflussmenge des Kühlmittels nach der Ist-Kühlwirkung des Lagerbocks (1), wobei die Ist-Kühlwirkung auf Basis der von den Temperatursensoren erfassten Temperatur des Kühlmittels im Einlauf und im Auslauf des Kühlmittelkanals (1b) ermittelbar ist.

## Claims

1. Bearing block (1) for mounting a bearing (3) for a roller (2), particularly a strip guide roller in a strip guide device, comprising at least one coolant channel (1b) with an inlet (19) and an outlet (20) for coolant, wherein the bearing block (1) together with the integrated internal coolant channel (1b) is constructed as a solid cast body, **characterised by** a rotational speed sensor (13) for detecting the rotation speed of the roller and at least two temperature sensors (14) for detecting the temperature of the coolant in the coolant channel (1b), wherein the temperature sensors (14) are constructed as thermoelements and a first thermoelement is provided in the inlet (19) for detecting the coolant entry temperature and a second thermoelement is provided in the outlet (20) of the coolant channel for detecting the coolant exit temperature.

2. Bearing block (1) according to claim 1, **characterised in that** the rotational speed sensor (13) is constructed as a Hall sensor and that preferably a plurality of magnets (11) for co-operation with the Hall sensor is secured, preferably with the help of magnet holders (12), to the journal (2a) of the roller.

3. Bearing block (1) according to one of the preceding claims, **characterised by** a blind bore, which is formed from outside in the bearing block and in which the rotational speed sensor is secured.

4. Bearing block (1) according to claim 1, **characterised in that** the thermoelements (14) are each constructed as screw-in thermoelements and are screwed into a bore in the inlet (19) and the outlet (20) of the coolant channel (1b) in the bearing block (1).

5. Bearing block (1) according to any one of the preceding claims, **characterised in that** at least one stabilising rib (21) is formed in the coolant channel (1b).

6. Bearing block (1) according to any one of the preceding claims, **characterised in that** the bearing block is cast from a hardened corrosion-resistant chromium-nickel-copper steel.

7. Bearing block (1) according to any one of the preceding claims, **characterised by** corrugated hoses for signal cables of the thermoelements and/or the Hall sensor, wherein the corrugated hoses are secured to the bearing block (1) by sleeves (17).

8. Bearing block (1) according to any one of the preceding claims, **characterised in that** the bearing (3) is constructed as a sealed roller bearing.

9. Strip guide device of a continuous casting plant, comprising:
a plurality of strip guide rollers for guiding a cast strip after leaving a continuous casting mould;
**characterised in that**
at least one journal of one of the strip guide rollers is mounted in a bearing block (1) according to any one of the preceding claims and that a process control is provided for regulating the feed flow quantity of the coolant in accordance with the actual cooling effect of the bearing block (1), wherein the actual cooling effect is determinable on the basis of the temperature, which is detected by the temperature sensors, of the coolant in the inlet and outlet of the coolant channel (1b).

## Revendications

1. Chaise de palier (1) pour la réception d'un palier (3) destiné à un rouleau (2) en particulier un rouleau de guidage de barre de coulée continue dans un mécanisme de guidage de barre de coulée continue, présentant au moins un canal (1b) destiné à un moyen de refroidissement, comprenant une entrée (19) et une sortie (20) pour le moyen de refroidissement ;
dans laquelle la chaise de palier (1) est réalisée avec le canal interne intégré (1b) destiné à un moyen de refroidissement sous la forme d'un corps moulé plein ;
**caractérisée par**
un capteur de la vitesse de rotation (13) pour l'enregistrement de la vitesse de rotation du rouleau ; et
au moins deux capteurs de la température (14) destinés à l'enregistrement de la température du moyen de refroidissement dans le canal (1b) destiné à un moyen de refroidissement; dans laquelle
les capteurs de la température (14) sont réalisés sous la forme de thermocouples, et un premier thermocouple est prévu dans l'entrée (19) du canal destiné au moyen de refroidissement pour l'enregistrement de la température d'entrée du moyen de refroidissement et un second thermocouple est prévu dans la sortie (20) du canal destiné au moyen de refroidissement pour l'enregistrement de la température de sortie du moyen de refroidissement.

2. Chaise de palier (1) selon la revendication 1, **caractérisée en ce que** le capteur de la vitesse de rotation (13) est réalisé sous la forme d'un capteur de l'effet Hall ; et **en ce que**, de manière préférentielle, une multitude d'aimants (11) - de préférence à l'aide d'éléments de retenue d'aimants (12) - est fixée au tourillon (2a) du rouleau à des fins de coopération avec le capteur de l'effet Hall.

3. Chaise de palier (1) selon l'une quelconque des revendications précédentes, **caractérisée par** un alésage borgne, introduit depuis l'extérieur dans la chaise de palier, dans lequel est fixé le capteur de la vitesse de rotation.

4. Chaise de palier (1) selon la revendication 1, **caractérisée en ce que** les thermocouples (14) sont réalisés respectivement sous la forme de thermocouples à introduire par vissage et sont introduits par vissage dans la chaise de palier (1) dans un alésage à l'entrée (19) et à la sortie (20) du canal (1b) destiné au moyen de refroidissement.

5. Chaise de palier (1) selon l'une quelconque des revendications précédentes, **caractérisée en ce que**, dans le canal (1b) destiné au moyen de refroidissement, on réalise au moins une nervure de stabilisation (21).

6. Chaise de palier (1) selon l'une quelconque des revendications précédentes, **caractérisée en ce que** la chaise de palier est coulée à partir d'un acier inoxydable durci à base de chrome-nickel-cuivre.

7. Chaise de palier (1) selon l'une quelconque des revendications précédentes, **caractérisée par** des tuyaux flexibles ondulés destinés à des câbles de signalisation des thermocouples et/ou du capteur de l'effet Hall ; dans laquelle les tuyaux flexibles ondulés sont fixés avec des manchons (17) à la chaise de palier (1).

8. Chaise de palier (1) selon l'une quelconque des revendications précédentes, **caractérisée en ce que** le palier (3) est réalisé sous la forme d'un palier à rouleaux rendu étanche.

9. Mécanisme de guidage de barre de coulée continue d'une installation de coulée continue, présentant :
une multitude de rouleaux de guidage de barre de coulée continue pour le guidage d'une barre de coulée continue une fois que celle-ci a quitté une lingotière de coulée continue ; **caractérisé en ce qu'**au moins un tourillon d'un des rouleaux de guidage de barre continue est monté dans une chaise de palier (1) selon l'une quelconque des revendications précédentes ; et **en ce qu'**on prévoit une commande de processus pour le réglage de la quantité d'amenée du moyen de refroidissement en fonction de l'effet de refroidissement réel de la chaise de palier (1) ; dans lequel, l'effet de refroidissement réel peut être déterminé sur base de la température du moyen de refroidissement, enregistrée par les capteurs de la température, à l'entrée et à la sortie du canal (1b) destiné au moyen de refroidissement.
